Europäisches Patentamt

(19) European Patent Office  (11) Publication number: **0 105 624**

Office européen des brevets  **B1**

(12) **EUROPEAN PATENT SPECIFICATION**

(45) Date of publication of patent specification: **11.11.87**  (51) Int. Cl.⁴: **B 24 B 5/30**

(21) Application number: **83305138.6**

(22) Date of filing: **05.09.83**

(54) Regulating wheelhead drive for a centerless grinder.

(30) Priority: **03.09.82 US 414846**

(43) Date of publication of application:
**18.04.84 Bulletin 84/16**

(45) Publication of the grant of the patent:
**11.11.87 Bulletin 87/46**

(84) Designated Contracting States:
**DE FR GB IT**

(56) References cited:
**DE-B-1 253 997**
**DE-C- 361 918**
**FR-A-2 346 103**
**US-A-1 814 365**
**US-A-2 568 825**

(73) Proprietor: **LITTON INDUSTRIAL PRODUCTS, INC.**
**East Sixth Street**
**Waynesboro Pennsylvania 17268 (US)**

(72) Inventor: **Shank, William E.**
**77 Briar Ridge Drive**
**Waynesboro Pennsylvania 17268 (US)**
Inventor: **Bercaw, Kenneth K.**
**13654 Lower Edgemont Road**
**Waynesboro Pennsylvania 17268 (US)**

(74) Representative: **Warren, Anthony Robert et al**
**BARON & WARREN 18 South End Kensington**
**London W8 5BU (GB)**

Courier Press, Leamington Spa, England.

## Description

In centerless grinding machines where frequent changes of wheelheads are required as part of the normal operation of the machine, it becomes very desirable to be able to make such changes without affecting other elements of the drive train. Commonly, such a changeover requires removing gear housings or other major machine elements.

US—A—1814365 discloses a centerless grinder in which a regulating wheelhead drive is supported in its own bearing system, independently of the wheelhead which is also supported in its own bearing system. The wheelhead drive is coupled to the wheelhead to drive the latter via a slidable coupling, namely an Oldham coupling, which accommodates misalignment between the rotational axes of the wheelhead drive and the wheelhead. However, the patent is not concerned with, and does not disclose, how the wheelhead may be changed.

It is an object of the present invention to provide a centerless grinder of this general type in which the wheelhead drive and wheelhead may be readily engaged and disengaged without affecting either bearing system.

According to the present invention there is provided a centerless grinder comprising a machine frame, and a regulating wheelhead drive including a main drive shaft having a first shaft portion rotatably supported in bearing means from the machine frame, a threaded second shaft portion and tapered third shaft portion, the wheelhead drive further including a coupling arrangement, having orthogonally disposed slidably interengaging lug means and key slot means, operable in use of the grinder to drivingly couple the drive shaft to a grinder wheelhead whilst accommodating limited axial misalignment between the rotational axes of the drive shaft and wheelhead, characterised in that the threaded second shaft portion is axially adjacent the first shaft portion, and the third shaft portion extends through a bore in the machine frame, is axially adjacent the threaded second shaft portion, and is tapered inwardly toward the threaded second shaft portion, the wheelhead drive further including a clamping ring having a threaded inner diameter for threadedly engaging with the threaded second shaft portion, and a drive coupling having a tapered bore defining a surface for mating engagement with the tapered third shaft portion, and having a threaded outer diameter, the coupling arrangement including drive means at the end of the third shaft portion remote from the first shaft portion, and coupling means having orthogonally disposed lug means and key slot means, one of said lug or slot means being drivingly engaged with the drive means, and the other of said lug or slot means being operable, in use of the grinder, to drivingly couple the coupling means to the grinder wheelhead, the wheelhead drive further including a locking ring having a threaded inner diameter for threadedly engaging the threaded outer diameter of the drive coupling, the locking ring being threadedly rotatable from a first position forcefully engaging and locking the clamping ring to a second position forcefully engaging the portion of the machine frame having said bore defined therein to break the frictional bond between the drive coupling and the tapered third shaft portion.

The slidable coupling means of the grinder embodying the invention accommodates axial misalignment between the wheelhead drive shaft and the wheelhead spindle, and assures easy and positively verifiable engagement between the drive shaft and wheelhead spindle.

In order that the invention may be more readily understood, reference will now be made to the accompanying drawings, in which:—

Figure 1 is a sectional view of the regulating wheelhead drive of a centerless grinder embodying the present invention, in the engaged position;

Figure 2 is an exploded perspective view of the regulating wheelhead drive shown in Figure 1; and

Figure 3 is a sectional view of the drive shown in Figure 1 in the disengaged position.

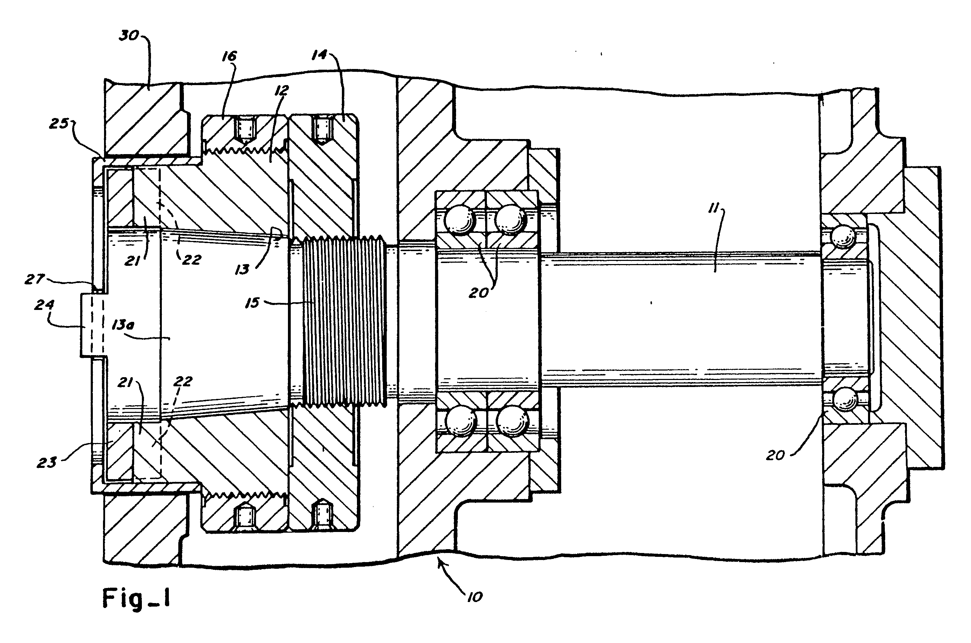

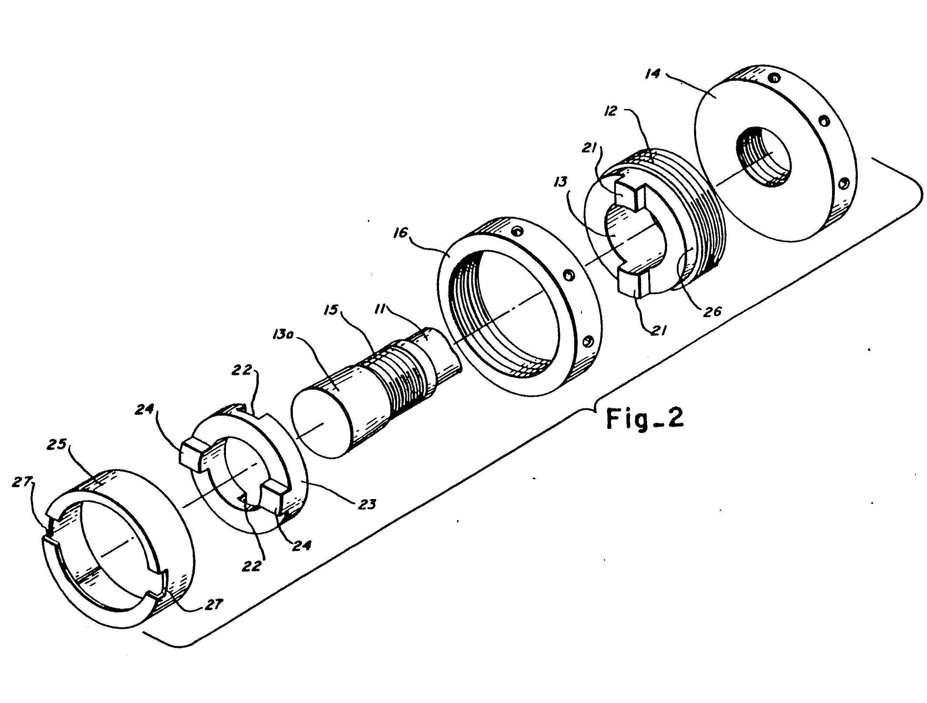

As seen in Figures 1 and 2, a centerless grinder regulating wheelhead drive 10 is comprised of a main drive shaft 11 rotatively driven by a motor/gearbox (not shown) independently supported by bearings 20 carried by the machine frame. A drive coupling or ring 12 is provided which has a tapered bore 13 which engages a tapered portion 13a of the shaft 11 when a clamping ring 14, threaded onto a threaded portion 15 of the shaft 11, is rotated and circumferentially contacts the coupling 12 causing it to be displaced axially into forceful engagement with the tapered shaft portion 13a. Forceful engagement is maintained by a locking ring 16 threaded onto the outer threaded diameter of drive coupling 12 and rotated to circumferentially jam it against the clamping ring 14. The clamping and locking rings are each provided with a plurality of holes disposed in and around the periphery thereof.

The drive coupling 12 is provided with lugs 21 which slidably engage key slots 22 in coupling means comprising a floating drive plate 23 which is held in engagement with the drive coupling by a retainer 25. The retainer is fitted over the floating drive plate 23 and is press fitted onto a shoulder 26 of the drive coupling 12. Floating drive plate 23 is sized to allow limited radial movement of the plate within the inside diameter of the retainer 25. Lugs 24, which are free to move in clearance notches 27 in the retainer 25 and which are on an axis orthogonal to the axis of lugs 21, slidably engage corresponding key slots on the wheelhead (not shown) when, as shown in Figure 1, the drive coupling 12 is engaged with the tapered shaft portion 13a and the lugs project from a bore in a wall portion 30 of the machine frame. The slidably cooperating lugs and key slots create a coupling, referred to in the industry as an Oldham coupling, which accommodates limited axial misalignment of the wheelhead spindle and the drive shaft.

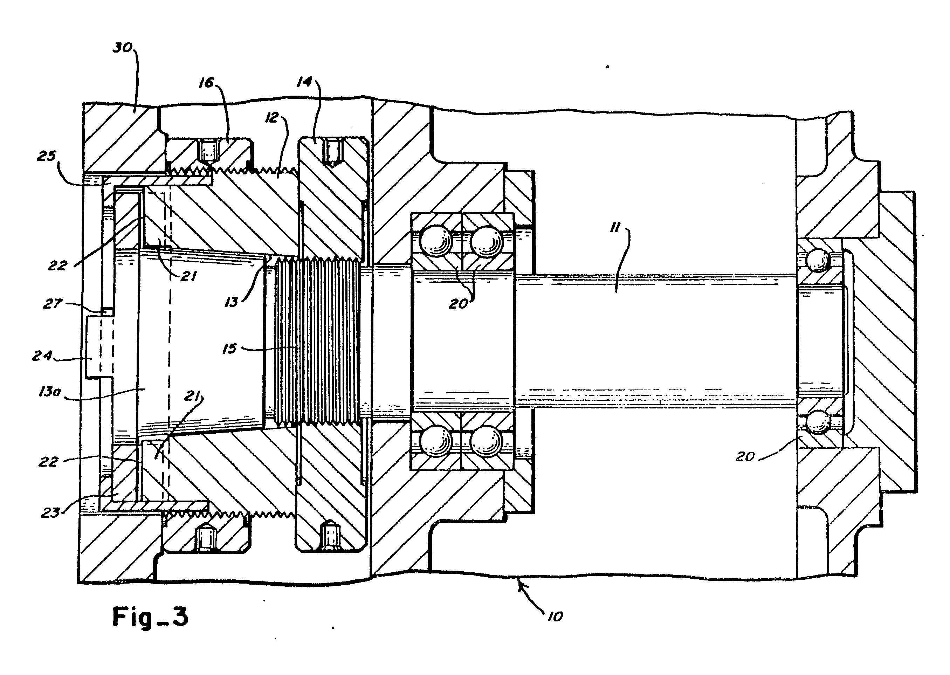

The coupling is disengaged from the wheelhead by axially withdrawing the drive lugs 24 from the wheelhead drive slots into the bore in the machine frame wall portion 30 as shown in Figure 3. As shown, the clamping ring 14 is threaded out of engagement with drive coupling 12, and locking ring 16 is threaded into circumferential engagement with the wall portion 30 of the machine frame 30, forcefully causing the drive coupling 12 to break free of shaft 11 and move axially away from the wheelhead, disengaging lugs 24 from the wheelhead key slots and leaving the wheelhead spindle free of the drive and readily removable and replaceable.

## Claims

1. A centerless grinder comprising a machine frame, and a regulating wheelhead drive (10) including a mean drive shaft (11) having a first shaft portion rotatably supported in bearing means (20) from the machine frame, a threaded second shaft portion (15) and a tapered third shaft portion, the wheelhead drive further including a coupling arrangement, having orthogonally disposed slidably interengaging lug means and key slot means, operable in use of the grinder to drivingly couple the drive shaft to a grinder wheelhead whilst accommodating limited axial misalignment between the rotational axes of the drive shaft and wheelhead, characterised in that the threaded second shaft portion (15) is axially adjacent the first shaft portion, and the third shaft portion (13a) extends through a bore in the machine frame, is axially adjacent the threaded second shaft portion (15), and is tapered inwardly toward the threaded second shaft portion, the wheelhead drive further including a clamping ring (14) having a threaded inner diameter for threadedly engaging with the threaded second shaft portion (15), and a drive couping (12) having a tapered bore (13) defining a surface for mating engagement with the tapered third shaft portion (13a), and having a threaded outer diameter, the coupling arrangement including drive means (21) located at the end of the third shaft portion (13a) remote from the first shaft portion, and coupling means (23) having orthogonally disposed lug means (24) and key slot means (22), one of said lug or slot means being drivingly engaged with the drive means (21), and the other of said lug or slot means being operable, in use of the grinder, to drivingly couple the coupling means (23) to the grinder wheelhead drive further including a locking ring (16) having a threaded inner diameter for threadedly engaging the threaded outer diameter of the drive coupling (12), the locking ring (16) being threadedly rotatable from a first position (Figure 1) forcefully engaging and locking the clamping ring (14) to a second position (Figure 3) forcefully engaging the portion (30) of the machine frame having said bore defined therein to break the frictional bond between the drive coupling (12) and the tapered third shaft portion (13a).

2. A grinder as claimed in claim 1, wherein the drive means (21) comprises lugs on the end of the drive coupling (12) remote from the first shaft portion, which drivingly engage the key slot means (22) in the coupling means (23).

3. A grinder as claimed in claim 2, wherein the lug means (24) operable to drivingly couple the coupling means (23) to the grinder wheelhead projects through and out of said bore in the machine frame portion (30) in the first position of the locking ring (16), and is withdrawn within the bore in the second position of the locking ring (16).

4. A grinder as claimed in claim 1, 2 or 3, including retainer means (25) pressed onto said remote end of the drive coupling (12) for holding the coupling means (23) assembled to the drive coupling.

## Patentansprüche

1. Spitzenlose Schleifmaschine mit einem Maschinenrahmen, und einem regulierenden Schleifspindelstock-Antrieb (10), der eine Hauptantriebswelle (11) mit einem ersten drehbar in Wellenlagern (20) des Maschinenrahmens (20) gelagerten Wellenteil, einem zweiten ein Gewinde aufweisenden Wellenteil (15) und einem dritten konisch ausgebildeten Wellenteil einschließt, der Schleifspindelstock-Antrieb ferner eine Kupplungs-Anordnung mit orthogonal ausgerichtet angeordneten und gleitend ein- und auskuppelnden Mitnehmer-Ansatz- und -Nut-Anordnungen für das drehantriebsmäßige Kuppeln der Antriebswelle mit dem Schleifspindelkopf beim Betrieb der Schleifmaschine aufweist, wodurch eine begrenzte achsiale achsiale Versetzung zwischen der Drehachse der Antriebswelle und der Drehachse des Schleifspindelstocks aufgenommen wird, dadurch gekennzeichnet, daß sich das ein Gewinde aufweisende zweite Wellenteil (15) achsial angrenzend des ersten Wellenteils erstreckt, und das dritte eine Bohrung im Maschinenrahmen durchgreifende Wellenteil (13a) achsial angrenzend des ein Gewinde aufweisenden zweiten Wellenteils (15) erstreckt und einwärts zu dem ein Gewinde aufweisenden Wellenteil konisch ausgebildet ist, der Schleifspindelstock-Antrieb ferner einen Klemmring (14) mit einem Innengewinde für den Gewindeeingriff mit dem ein Gewinde aufweisenden zweiten Wellenteil (15) und eine Antriebskupplung (12) mit einer eine konische Paßfläche für den Eingriff mit dem konischen dritten Wellenteil (13a) ausbildenden Bohrung (13) und einen ein Gewinde aufweisenden Außendurchmesser einschließt, die Kupplungs-Anordnung ein entfernt von ersten Wellenteil am Ende des dritten Wellenteils (13) angeordnetes Antriebselement (21), und ein Kupplungsteil (23) mit orthogonal ausgerichtet angeordneten Mitnehmer-Ansätzen (24) und Mitnehmer-Nuten (22) einschließt, eine der Mitnehmer- und Nut-Anordnungen drehantriebsmäßig in Eingriff mit den Antriebselement (21) ist und die andere der Mitnehmer- und Nutanordnungen beim Betrieb der Schleifmaschine drehantriebsmäßig das Kupplungsteil (23) mit dem Schleifspindelstock kuppelt, der Schleifspindelstock-Antrieb ferner einen Spannring (16) mit Innengewinde für den Gewindeeingriff mit dem Außengewinde der Antriebskupplung (12) aufweist, der Spannung (16) dabei in Gewindeeingriff von einer gegen den Klemmring (14) unter Kraftschluß und verspannt anliegenden ersten Position (Figur 1) in eine gegen das Teil (30) des Maschinenrahmens unter Kraftschluß anliegenden zweite Position (Figur 3) drehbar ausgebildet ist, wobei durch die darin vorgesehene Bohrung der Kraftschluß zwischen der Antriebskupplung (12) und dem dritten konischen Wellenteil (13a) unterbrochen wird.

2. Spitzenlose Schleifmaschine nach Anspruch 1, dadurch gekennzeichnet, daß das Antriebselement (21) an der dem ersten Wellenteil abgekehrten Ende der Antriebskupplung (12) Mitnehmer-Ansätze aufweist, die drehantriebsmäßig mit Mitnehmernuten (22) des Kupplungsteils (23) in Eingriff sind.

3. Spitzenlose Schleifmaschine nach Anspruch 2, dadurch gekennzeichnet, daß die in Betrieb drehantriebsmäßig das Kupplungsteil (23) mit dem Schleifspindelstock kuppelnden Mitnehmer-Ansätze (24) sich in der ersten Position des Spanrings (16) durch die und aus der Bohrung im Maschinenrahmen-Teil (30) erstrecken, und in der zweiten Position des Spannrings (16) zurückgezogen in der Bohrung liegen.

4. Spitzenlose Schleifmaschine nach Anspruch 1, 2 oder 3, dadurch gekennzeichnet, daß ein Haltering (25) vorgesehen ist, der zum Zusammenhalten des Kupplungsteils (23) mit der Antriebskupplung gegen das äußere Ende der Antriebskupplung (12) unter Druck anliegt.

## Revendications

1. Rectifeuse sans centre comprenant un bâti de machine, un entraînement de meule de contrôle (10) comportant un arbre d'entraînement principal (11) ayant une première partie d'arbre supportée en rotation dans des moyens de palier (20) du bâti de machine, une seconde partie d'arbre filetée (15) et une troisième partie d'arbre conique, l'entraînement de meule comprenant en outre un ensemble d'accouplement, ayant un moyen de tenon et un moyen de rainure de clavetage disposés orthogonalement et coopérant à coulissement, servant lors du fonctionnement de la rectifieuse à accoupler en entraînement l'arbre d'entraînement et une meule de rectifieuse tout en permettant un désalignement axial limité entre les axes de rotation de l'arbre d'entraînement et de la meule, caractérisée en ce que la seconde partie d'arbre filetée (15) est axialement adjacente à la première partie d'arbre, et la troisième partie d'arbre (13a) s'étend à travers un trou dans le bâti de machine, est axialement adjacente à la seconde partie d'arbre filetée (15), et est en forme de cône vers l'intérieur en direction de la seconde partie d'arbre filetée, l'entraînement de meule comprenant en outre un anneau de blocage ayant un diamètre intérieur taraudé pour se visser sur la seconde partie d'arbre filetée (15), et un accouplement d'entraînement (12) ayant un trou conique (13) définissant une surface pour son engagement à faible jeu avec la troisième partie d'arbre conique (13a), et ayant un diamètre extérieur fileté, l'ensemble d'accouplement comprenant un moyen d'entraînement (21) disposé à l'extrémité de la troisième partie d'arbre (13a) à l'opposé de la première partie d'arbre, et un moyen d'accouplement (23) ayant un moyen de tenon (24) et un moyen de rainure de clavetage (22) disposés orthogonalement, l'un desdits moyens de tenon ou de rainure de clavetage étant solidaire en entraînement du moyen d'entraînement (21), et l'autre desdits moyens de tenon ou de rainure de clavetage servant, lors de l'utilisation de la rectifieuse, à accoupler en entraînement le moyen d'accouplement (23) à la meule de rectifieuse, l'entraînement de meule comprenant en outre un anneau de verrouillage (16) ayant un diamètre intérieur taraudé pour se visser sur la diamètre extérieur de l'accouplement d'entraînement (12), l'anneau de verrouillage (16) se vissant par rotation entre une première position (figure 1) dans laquelle il s'engage en force et verrouille l'anneau de blocage (14) jusqu'à une seconde position (figure 3) dans laquelle il s'engage en force contre la partie (30) du bâti de machine ayant ledit trou pour faire cesser la liaison par friction entre l'accouplement d'entraînement (12) et la troisième partie d'arbre conique (13a).

2. Rectifieuse selon la revendication 1, dans laquelle le moyen d'entraînement (21) comprend des tenons sur l'extrémité de l'accouplement d'entraînement (12) opposée à la première partie d'arbre, qui s'engagent pour l'entraînement dans les moyens de rainures de clavetage (22) des moyens d'accouplement (23).

3. Rectifieuse selon la revendication 2, dans laquelle le moyen de tenon (24) servant à accoupler en entraînement le moyen d'accouplement (23) à la meule de rectifieuse s'étend à travers et hors dudit trou dans la partie de bâti de machine (30) dans la première position de l'anneau de verrouillage (16), et est retiré à l'intérieur du trou dans la seconde position de l'anneau de verrouillage (16).

4. Rectifieuse selon l'une des revendications 1, 2 ou 3, comprenant un dispositif de retenue (25) pressé sur ladite extrémité opposée de l'accouplement d'entraînement (12) pour tenir le moyen d'accouplement (23) assemblé à l'accouplement d'entraînement.

Fig_1

0 105 624

Fig._2

Fig_3

0 105 624